Europäisches Patentamt

European Patent Office

Office européen des brevets

(11) Publication number: **0 363 123**
**A1**

## EUROPEAN PATENT APPLICATION

(21) Application number: **89310052.9**

(22) Date of filing: **02.10.89**

(51) Int. Cl.5: **C25D 11/04 , B01D 71/02**

(30) Priority: **03.10.88 GB 8823145**

(43) Date of publication of application:
**11.04.90 Bulletin 90/15**

(84) Designated Contracting States:
**BE CH DE ES FR GB GR IT LI NL SE**

(71) Applicant: **ALCAN INTERNATIONAL LIMITED**
**1188 Sherbrooke Street West**
**Montreal Quebec H3A 3G2(CA)**

(72) Inventor: **Furneaux, Robin Christopher**
**Lady Barn The Level**
**Shenington Banbury Oxfordshire(GB)**
Inventor: **Rigby, William Roy**
**6 Byron Road**
**Banbury Oxfordshire(GB)**

(74) Representative: **Pennant, Pyers et al**
**Stevens, Hewlett & Perkins 5 Quality Court**
**Chancery Lane**
**London, WC2A 1HZ(GB)**

(54) **Porous anodic aluminium oxide membranes.**

(57) An asymmetric anodic aluminium oxide membrane has two major surfaces with a system of larger pores extending in from one surface and communicating with a system of smaller pores extending in a distance s from the other surface. The membrane is characterized by having a thickened small pore region so that the distance s is greater than 1 micron. Thickening the small pore region is effected by interrupting the voltage reduction procedure used to detach the membrane from its metal substrate. When used as filters for e.g. phage or mycoplasma, the membranes are more reliably defect-free.

EP 0 363 123 A1

## POROUS ANODIC ALUMINIUM OXIDE MEMBRANES

This invention is concerned with porous anodic aluminium oxide membranes, and more particularly with membranes of the asymmetric type, that is to say membranes having two major surfaces with a system of larger pores extending in from a first surface and communicating with a system of smaller pores extending in from a second surface. EPA 178831 describes membranes of this kind, and also a method of making them. In summary, that method involves anodising an aluminium metal substrate in an electrolyte, such as phosphoric, oxalic or sulphuric acid, which shows some dissolving power for aluminium oxide. This results in the formation of a porous anodic oxide film, whose thickness increases with time. The pores extend in from the outer surface of the film as far as a relatively thin barrier layer overlying the metal/oxide interface. As anodization proceeds, conversion of metal to oxide takes place at this metal/oxide interface. Both the thickness of the barrier layer and the diameter and spacing of the pores in the overlying porous region of the membrane are generally proportional to anodising voltage.

As formed, the anodic oxide membrane adheres tenaciously to its metal substrate. EPA 178831 describes a technique for separating the two by continuing anodising with a slowly reducing voltage. This has the effect of thinning the barrier layer by forming in it a system of smaller more closely spaced pores. Eventually, any residual barrier layer is dissolved away and the desired asymmetric porous anodic aluminium oxide membrane is lifted off the substrate.

By controlling the anodising variables, voltage, current density, time, temperature, electrolyte composition, very considerable control can be achieved over he properties of the asymmetric membrane.

For use as filters, these asymmetric membranes have a unique combination of properties, uniform controlled fine minimum pore size together with high flux. For a given minimum pore size, flux is inversely proportional to the depth of the small pore region (i.e. the length of the smaller pores). Where high flux is vital, this can be made very small, down to 0.3 microns or even less. EPA 178831 envisages the small pore region having a depth in the range 10 nm to 1.0 microns.

Conventional anodic oxide membranes do show occasional defects, generally in the form of openings of larger size than the rather uniform pores formed by anodising. Particularly with asymmetric membranes, such defects can result in loss of performance in some applications. An object of this invention is to provide anodic oxide membranes in which occasional defects do not result in loss of performance. A subsidiary object is to reduce the incidence of defects by pretreating the aluminium metal.

In one aspect the invention provides an anodic aluminium oxide membrane having two major surfaces with a system of larger pores extending in from a first surface and communicating with a system of smaller pores extending a distance s in from a second surface, characterized in that the distance s is greater than 1 micron. In another aspect, the invention provides a method of making an anodic aluminium oxide membrane having two major surfaces with a system of larger pores extending in from a first surface and communicating with a system of smaller pores entending in from a second surface, by the steps of anodising an aluminium metal substrate to form theron an oxide membrane, subjecting the oxide membrane to voltage reduction at a rate sufficiently slow that partial or complete recovery of the oxide membrane keeps step with the voltage reduction, and recovering the oxide membrane from the substrate, characterized in that the voltage reduction is interrupted at a voltage and for a time sufficient to increase the distance s, by which the system of smaller pores extends in from the second surface, by at least 0.05 microns.

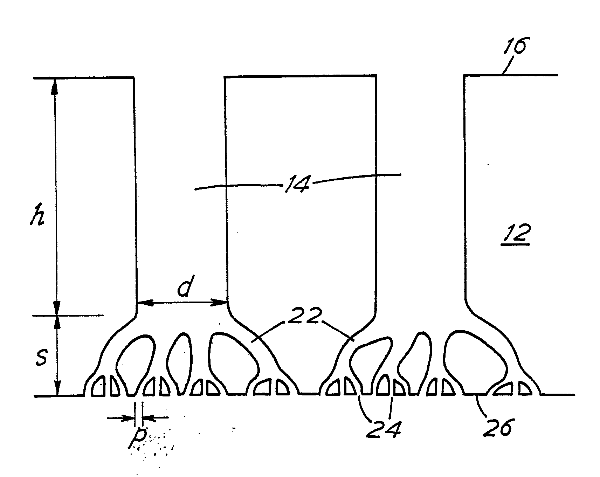

Reference is directed to the accompanying figure which is a section through an anodic aluminium oxide film according to the invention. The film 12 has two major faces 16, 26. A system of larger pores 14 extends in from one face 16 a distance h into the film, these larger pores having a diameter d near their inner ends. A system of smaller pores 22, 24 extends in from the other face 26 a distance s into the film, the smaller pores having a substantially uniform minimum diameter p. Typical dimensions are as follows:

d is 10 nm to 2 microns

h is 0.1 to 100 microns

p is 2 nm to 100 nm but less than 0.5 d.

s is greater than 1 micron, up to 5 microns but more usually up to 2 microns.

When an aluminium metal surface is anodized using a range of electrolytes, a porous anodic oxide film is formed. This comprises a non-porous barrier layer adjacent the metal, whose thickness is approximately 1 nm per volt. The pores have a diameter of approximately 1 nm per volt and are spaced apart approximately 2.5 nm per volt, these figures being largely independent of electrolyte, temperature and whether AC or DC is used. A voltage reduction is followed by a temporary recovery phase, during which the barrier layer is thinned by the formation of new pores branching out form the bases of the old ones. When the barrier layer has reached a thinner value appropriate to the new voltage, recovery is complete, and anodising continues by oxidation at the metal/alumina interface.

Successive voltage reductions lead to successive branching of the pores at their bottom ends. By terminating the voltage reduction at a very low voltage, only an extremely thin barrier layer is left which is readily dissolved causing separation of the film from the metal substrate.

During the voltage reduction procedure, the applied voltage is reduced from the anodising voltage down to a value preferably no more than 15V. When this reduction is effected in increments, each incremental reduction is preferably by an amount not more than the greater of 5V and 50% of the existing voltage. The minimum small pore diameter p is determined by the minimum voltage at which significant new pore formation is effected during this voltage reduction procedure.

When the voltage reduction procedure is carried out as fast as possible, it typically takes from 15 to 45 minutes and results in a small pore region having a depth s which represents approximately what was the barrier layer in the original anodized film. According to the present invention, the voltage reduction procedure is interrupted at least once at a voltage intermediate the starting and finishing voltages. The metal substrate with the anodic oxide membrane thereon is held at that intermediate voltage for a time sufficient to increase, by further anodization of the substrate, the depth of the small pore region by at least 0.05 microns. The voltage reduction may be interrupted more than once, and the small pore growth of at least 0.05 microns preferably at least 0.1 microns is specified as the aggregate result of all the interruptions.

During the interruption, conversion of metal to oxide takes place at the metal/oxide interface, and small pores penetrate the then existing barrier layer, at a rate such that thickness of the barrier layer remains approximately 1 nm per volt. The small pores have a diameter also of approximately 1 nm per volt. The rate of anodic membrane growth depends to some extent on the nature of the electrolyte, but is typically 0.5 microns per minute for each mA/cm$^2$ of applied current. Using these figures as a guide, and bearing in mind that chemical dissolution of the anodic membrane by the electrolyte is always taking place independent of any applied current, a skilled reader can readily decide at what voltage, and for how long, to interrupt the voltage reduction procedure in order to achieve a desired structure in the small pore region of the membrane. The voltage reduction procedure is likely to be interrupted at a voltage of from 5 to 150 volts for a time of from 1 minute to 3 hours, preferably 10 to 60 minutes, shorter times being generally appropriate to higher voltages and vice versa.

For the duration of the interruption, the metal substrate with the anodic membrane on it may remain in the electrolyte being used for voltage reduction or may be transferred to another electrolyte. An advantage of moving the substrate is that the new electrolyte can be chosen to minimize chemical dissolution, which is generally not desired as it enlarges pore diameters. Preferably, the electrolyte used during interruptions at less than 30 volts is dilute sulphuric acid, which has a relatively low dissolving power for anodic aluminium oxide and permits the use of relatively high current densities so as to cause relatively rapid film growth at low voltage. An electrolyte containing phosphoric acid is preferred for interruption at more than 30 volts. An upper limit on the interruption time is set by the need to avoid dissolving so much of the large pore region that it becomes weakened.

The minimum pore diameter, which is determined by the lowest voltage at which significant anodization takes place, occurs at the metal/oxide interface and hence (after separation of the oxide membrane from the metal substrate) at one surface of the membrane. Sometimes, the minimum pore diameter may be smaller than is actually desired. In these circumstances, the membrane can be immersed for a suitable time in a liquid, e.g. phosphoric acid, which dissolves the anodic aluminium oxide. The small pore region is dissolved more quickly than the large pore region, on account of its higher specific surface area. This technique can be used to increase the minimum pore diameter of the separated membrane in a controlled manner.

Any increase in the thickness of the small pore region is likely to reduce the flux of the anodic oxide membrane, which may not be desired when the membrane is to be used as a filter. The membranes may nevertheless be advantageous if they are more reliable. Aluminium metal necessarily contains secondary phase particles resulting from the presence of impurities, and these give rise to defects, generally voids, in the anodic oxide membrane. Provided that the largest dimension of any defect is smaller than the length of pores of less than specified diameter in the small pore region of the membrane, the presence of defects need not damage the properties of the membrane as a filter. The thickness of the small pore region of the membrane needs to be chosen, in the light of the expected size and frequency of defects, to achieve the combination:

- minimum loss of performance (specified as small pores at least as long as the likely size of any defects), and

- minimum loss of flux (small pores as short as possible consistent with the above).

The production of virus and mycoplasma free liquids eg. for growth media, serum suppliments etc. is becoming increasingly important with the advent of more advanced techniques in biotechnology. In particular, cell culture and fermentation are especially susceptible to contamination by virus and mycoplasma. At present existing liquid filtration systems are far from ideal for this function. Either the variation in pore size is too great to permit a sufficient degree of confidence in the separation; the problem being that existing commercial filtration membranes constructed from regenerated cellulosic materials or from synthetic polymers possess wide pore size distribution with some pores even being of 'pin-hole' size; or the membrane is tight that the flux is low and high molecular weight compounds are to some degree rejected.

Conventional anodic aluminium oxide membranes have the desired combination of narrow pore size range and high flux, but the existence of defects makes them not reliably aseptic. Membranes of the present invention should when challenged in a filtration test of an aqueous phage or mycoplasma suspension, yield a filtrate in which the concentration of the phage or mycoplasma being tested is no more than 0.1%, preferably no more than 0.01% more preferably no more than .001% and desirably 0%, of that of the starting suspension. Phages are virus which require bacteria in which to replicate, and are typically about 25-65 nm diameter. Mycoplasma removal from plasma is difficult because the mycoplasma lack a rigid cell wall and can therefore deform under pressure and squeeze through a conventional polymeric 0.2 microns bacterial membrane.

Secondary phase particles in aluminium metal result from the presence of impurities. It would be possible to reduce the incidence of secondary phase particles by using purer metal; and indeed it is preferred to use substantially pure metal. But the cost of very pure aluminium metal is high, and even pure metal may be cast in such a way as to leave small to voids which can also cause defects in anodic oxide membranes. However, aluminium metal can be controlled or pre-treated to minimize the incidence of defects. One option is to use metal of at least 99.98%, preferably at least 99.995%, purity. Alternatively, the metal pre-treatments described below may permit the use of aluminium metal of somewhat lower purity than would otherwise be necessary. The aluminium metal to be pre-treated should preferably be at least 99.5% pure, desirably at least 99.9% pure.

One way of pre-treating the aluminium metal is to cast it by means of a roll casting technique. In a twin-roll caster, the molten metal is solidified in the nip of a pair of heavily chilled steel rolls which draw the molten metal out of an insultated injector nozzle in close proximity to the rolls, the cast material being in the form of a slab e.g. in a thickness range of up to 25 mm and being typically cast at a speed of 60 to 200 cm/min. The metal is cooled at a rate of at least 100's and generally 1000's of °C per second and essentially fully solidified when it passes the centre line of the caster rolls. As a result of the high rate of cooling, impurities which might otherwise have formed secondary phase particles, tend to remain in solution, in which state they do not significantly affect anodising. Also, impurities tend to be concentrated towards the centre of the sheet where they are less likely to be subjected to anodizing. The roll cast product may be subsequently treated under conventional conditions, e.g. annealing and cold rolling, which do not result in precipitation of impurities.

Another preferred pre-treatment, which can be applied to aluminium cast by any technique, is homogenisation. The aluminium metal is heated to a temperature in the range 500°C to its melting point and held there for a sufficient time to cause secondary phase impurities to go into solution. To reduce heating time, the temperature may be raised to 600°C or more, subject to the requirement that the metal does not become too limp or soft to handle without damage. The metal should preferably not be cold worked, and certainly not hot worked, after homogenising. Preferably, homogenising is the last step performed on the metal prior to surface preparation for anodising.

Yet another pre-treatment involves cladding a sheet of higher purity Al metal on a substrate of lower purity Al metal. The purity of the aluminium at the metal/oxide interface determines the quality of the anodic metal oxide layer.

The following examples illustrate the invention.

Example 1

The following starting materials were used:

a) 99.95% aluminium sheet which was bought from a commercial source but is believed to have been DC cast followed by hot rolling.

b) 99.99% aluminium sheet produced by roll casting.

Anodising at 150 Volts was carried out in a mixed oxalic/phosphoric acid electrolyte at 25°C until an anodic film 60 microns thick had been formed, with a barrier layer 0.15 microns thick. Voltage reduction was carried out in the anodising acid; using the following conditions:

% Voltage Step - 5

Minimum Voltage Step - 0.3

% di/dt - 0.5

until the voltage was reduced to 20 Volts whereupon the film was allowed to recover and the anodising continued for sixty-six (66) minutes. Voltage reduction was then continued down to 0.3 volts.

The sheet carrying the anodic film was then transferred to a solution containing 33 vol % phosphoric acid in water at 22°C and allowed to soak for 15 minutes to detach the anodic film.

The resulting asymmetric layer was 1.2 microns thick and the pore size 0.05 $\mu$m. Expected pore size was 0.02 $\mu$m; the increase in diameter being brought about by dissolution of the pore walls during the prolonged soak required to detach the film.

For purposes of comparison, anodic oxide membranes were also made from the same starting materials using the same procedure except that the voltage reduction was not interrupted. In these cases the expected and actual minimum pore size was 0.02 microns and the depth of the small pore layer was approximately 0.15 microns.

## Example 2

A viral challenge experiment was performed using anodic oxide membranes prepared according to Example 1 and designated as follows:-

A. - DC cast metal substrate, small pore region s = 0.15 microns thick.

B. - Roll cast metal substrate, small pore region s = 0.15 microns thick.

C. - DC cast metal substrate, small pore region s = 1.2 microns thick.

D. - Roll cast metal substrate, small pore region s = 1.2 microns thick.

The feed solutions and the permeates were tested for the presence of viable virus by challenging specially prepared bacterial lawns. This is a highly sensitive technique, the limit of detection being IPFU/cm3 (Plaque Forming Units) in $10^8$ -$10^{11}$ PFU/cm3 challenging the membrane.

Routinely, sterilised membranes were fixed into autoclaved holders with the small pore side facing upstream prior to filtration.

Controls were run in which phage suspensions were passed through membrane holders without membranes present to account for the absorption of phages by the holders. The PFUs from these filtrates were used as the 100% passage reference value. Suitable dilutions of phage were taken up in 20cm$^3$ syringes and filtration proceeded using thumb pressure.

Five different bacterio-phages were used to challenge the membranes (see Table 1). Three separate membranes were challenged with each viral phage. The sensitivity of the procedure is dependent on the particular phage and is as follows:-

| MS2 | 1 part in $10^7$ |
|---|---|
| QB | 1 part in $10^7$ |
| oX174 | 1 part in $10^7$ |
| P22 | 1 part in $10^8$ |
| Pi Vira | 1 part in $10^8$ |

TABLE 1

| Cultures used. | | | |
|---|---|---|---|
| Phage | Shape | Size(nm) | Host |
| MS2(NCIB 10108) | Icosahedral | 25 | E.coli (NCIB 9481) |
| QB(NCIB 11289) | Icosahedral | 25 | E.coli (NCIB 11288) |
| $\phi$X174(NCIB 10382) | Icosahedral with projections | 25-30 | E.coli (NCIB 10544) |
| P22(NCIB 10411) | Icosahedral | 65 | S.typhimurium (NCIB 10248) |
| Pi Vira | Icosahedral | 35 | E.coli(KL16) |

The results of the tests are set out in the following Table 2.

TABLE 2

| Phage | Membrane | | | |
|---|---|---|---|---|
| | A | B | C | D |
| MS2 | 15 | 0.481 | 0.0057 | 0.0018 |
| QB | 4.3 | 0.094 | 0.0159 | 0.0049 |
| $\phi$X174 | 0.0 | 0.0001 | 0.0018 | 0.0000 |
| P22 | 0.5 | 0.085 | 0.0014 | 0.00065 |
| Pi Vira | 0.28 | 0.385 | 0.0005 | 0.00002 |

It is apparent that, despite their larger minimum pore size, membranes C and D with longer small pores came very much closer to providing a totally aseptic filtrate. This is attributed to the almost complete lack in these membranes of any defects revealing pores significantly larger than the average.

Example 3

99.95% aluminium sheet was anodized in mixed electrolyte at 25°C for 160 minutes to produce an anodic oxide film approximately 60 microns thick. The voltage was reduced at a rate di/dt of 0.5% down to 80 volts and held for thirty minutes. Voltage reduction was continued at the same rate down to 0.3 volts. The film, still attached to the metal substrate, was removed from the anodizing tank and immersed for 30 minutes in 33% phosphoric acid solution at 22°C to lift the film from the substrate and dissolve the fine pores. The resulting asymmetric membrane has a system of larger pores of 0.2 microns extending in from one face and communicating with a system of smaller pores of 0.1 microns extending in from the other face.

The membrane was made up into filters. A total of 239 filters, which had been shown to be capable of withstanding a pressure of 700 kPA, were tested against a challenge of 1.9 x $10^5$ CFU/ml Mycoplasma orale suspended in 10 ml of phosphate buffered saline. Filtrates were centrifuged, resuspended in mycoplasma broth, incubated and subcultured after 7 days to agar plates. Plates were observed after 6 days 5% $CO_2$:95% $H_2$ anaerobic incubation at 37°C. All 239 filters had excluded mycoplasma from the filtrate.

**Claims**

1. An anodic aluminium oxide membrane having two major surfaces with a system of larger pores extending in from a first surface and communicating with a system of smaller pores extending a distance s in from a second surface, characterized in that the distance s is greater than 1 micron.

2. A membrane as claimed in claim 1, wherein the distance s is up to 2 microns.

3. A membrane as claimed in claim 1 or claim 2, wherein the smaller pores have a minimum diameter of not more than 0.15 microns.

4. A membrane as claimed in claim 3 which is free of any defect which reveals a pore of diameter greater than 0.15 micron.

5. A membrane as claimed in any one of claims 1 to 4 which, when challenged in a filtration test of an aqueous phage or mycoplasma suspension, yields a filtrate in which the concentration of the phage or mycoplasma is not more than 0.01% of that of the starting suspension.

6. A method of making an anodic aluminium oxide membrane having two major surfaces with a system of larger pores extending in from a first surface and communicating with a system of smaller pores extending in from a second surface, by the steps of anodizing an aluminium metal substrate to form theron an oxide membrane, subjecting the oxide membrane to voltage reduction at a rate sufficiently slow that partial or complete recovery of the oxide membrane keeps step with the voltage reduction and recovering the oxide membrane from the substrate, characterized in that the voltage reduction is interrupted at a voltage and for a time sufficient to increase the distance s, by which the system of smaller pores extends in from the second surface, by at least 0.05 microns.

7. A method as claimed in claim 6, wherein the voltage reduction is interrupted for a time sufficient to increase the distance s to a value greater than 1 micron.

8. A method as claimed in claim 6 or claim 7, wherein the voltage reduction is continued down to a minimum voltage not greater than 15 volts.

9. A method as claimed in any one of claims 6 to 8, wherein there is used an aluminium metal substrate of at least 99.9% purity at the metal/oxide interface which has been pre-treated by roll-casting.

10. A method as claimed in any one of claims 6 to 8, wherein there is used an aluminium metal substrate of at least 99.9% purity at the metal/oxide interface which has been pre-treated by homogenisation.

11. A method as claimed in any one of claims 6 to 10, wherein there is used an aluminium metal substrate of at least 99.9% purity at the metal/oxide interface.

12. A method as claimed in any one of claims 6 to 11, wherein after the voltage reduction step the membrane is subjected to the action of a liquid to partly dissolve away the part of the membrane containing the system of smaller pores to increase the minimum pore diameter in a controlled manner.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | EP-A-0 178 831 (ALCAN) ----- | | C 25 D 11/04 B 01 D 71/02 |

TECHNICAL FIELDS
SEARCHED (Int. Cl.5)

C 25 D 11/04
B 01 D 71/02

The present search report has been drawn up for all claims

| Place of search | Date of completion of the search | Examiner |
|---|---|---|
| THE HAGUE | 20-12-1989 | VAN LEEUWEN R.H. |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
............................................................
& : member of the same patent family, corresponding
  document

EPO FORM 1503 03.82 (P0401)